# NEW EUROPEAN PATENT SPECIFICATION

(11) **EP 0 180 792 B2**
(45) Date of publication and mention of the opposition decision: **01.09.1999**
(45) Mention of the grant of the patent: 28.03.1990
(21) Application number: 85112715.9
(22) Date of filing: 08.10.1985
(51) Int. Cl.: G01N 35/10, G01N 33/52, B65H 5/00, G01N 1/12

(54) **Method and apparatus of automatic continuous analysis using analytical implement**
Verfahren und Vorrichtung zur automatischen kontinuierlichen Analyse unter Verwendung eines Analysegerätes
Procédé et dispositif pour l'analyse automatique et continue à l'aide d'un appareil analytique

(30) Priority: 11.10.1984 JP 21359284; 05.11.1984 JP 23267884
(43) Date of publication of application: 14.05.1986
(73) Proprietor: KABUSHIKI KAISHA KYOTO DAIICHI KAGAKU, Kyoto-shi Kyoto 601 (JP)
(72) Inventor: Inoue, Kazushige, Ibaraki-shi Osaka (JP); Yamamoto, Hiroshi, Uji-shi Kyoto (JP); Hyodo, Hiroshi, Fushimi-ku Kyoto-shi Kyoto (JP); Kishimoto, Shinichi, Kumiyama-cho Kuze-gun Kyoto (JP)
(74) Representative: Patentanwälte Hauck, Graalfs, Wehnert, Döring, Siemons

(56) References cited:
- EP-A- 0 054 849
- EP-A- 0 064 691
- EP-A- 0 098 773
- DE-B- 2 437 332
- GB-A- 2 013 334
- GB-A- 2 014 113
- GB-A- 2 096 314
- US-A- 3 348 418
- US-A- 3 645 690
- US-A- 3 980 437
- US-A- 4 125 372
- US-A- 4 269 803
- ANALYTICAL CHEMISTRY, vol. 56, no. 4, April 1984, pages 742-745, Easton, US; W.E. NEELEY: "Reflectance photometer for multiplayer dry film slides
- PATENT ABSTRACTS OF JAPAN, vol. 7, no. 278, (P-242)(1423), Dezember10th, 1983 & JP -A- 58 156 833 (KONISHIROKU SHASHIN KOGYO K.K.) 17-09-83
- RESEARCH DISCLOSURE, no. 197, September 1980, Havart, GB; "Slide transfer apparatus", pages 375-376
- Analytical Chemistry, vol. 55, no. 11, September 1983, pages 1100A - 1102A, R. Dessy ed.: "Robots in the Laboratory: Part I".
- Specification of the analysis apparatus "Hitachi 705"
- Dubbel, "Taschenbuch für den Maschinenbau", Springer Verlag 1981, pages 325, 326.

## Description

The invention relates to an apparatus according to the preamble of claim 1.

Analytical implements as for instance shown by the US-Patent 4.125.372 are most widely used in the analysis of blood, urine and the like. They comprise a plastic strip provided at its one end with a number of reagent sections corresponding to the number of measuring items and a holding section at its other end. The reagent sections may be small pieces of filter paper impregnated with a reagent.

Some types of analytical implements are provided with a reference reflector near the reagent section or have a coating layer on the holding section for distinguishing the type and fitting face of the reagent section. Often black adhesive tape is used to facilitate optical measurement.

Analytical implements are originally used in the "Dip-and-Read-inspection by which the concentration of a material is determined comparing the color of the implement after having been dipped into the solution to be examined with a reference color.

At present it is known to carry out instrumentally the "read" stage. The determination and in some cases the optical measurement, calculation, display of concentration and the discharge of the analytical implement have been automated.

In this connection, the U.K. Application 2014113 discloses an automatic device for the evaluation of implements. It comprises an automatic carrier and an automatic measuring device. Implements wettened with the solution to be examined are inserted manually into receivers of the carrier and led to the measuring device which measures the reflexion capacity of the reagent areas. The time which passes between insertion and measurement may be predetermined as to correspond with a reaction time of the implements. After the measurements the implements are automatically removed from the carrier device.

In contrast the "dip" stage is still performed manually. The analytical implements have to be taken out one by one from a closed vessel and have to be dipped into the sample solution which represents a time consuming procedure for the operator, especially when a large number of samples is to be analyzed. Furthermore, it is difficult to standardize the dipping time orthe time which passes between the dipping and the start of the measurement, respectively, which may result in measurement errors.

With respect to the costs and the accuracy it is therefore desirable to provide an inexpensive automatic analysis apparatus using analytical implements which is connected to an automatic evaluation device and carries out all remaining steps necessary for the analysis.

This object is attained by an apparatus having the features of the characterizing portion of claim 1.

The apparatus according to the invention comprises:
a. means to remove implements one by one from a storage section of an automatic supply device into a picking-position and
b. an automatic analytical handling device which picks up the implement positioned in the picking-up position, dips it into a sample solution and thereafter moves it to a carrier of an automatic evaluation device.

The handling device comprises a moveable arm which is adapted to be displaced into different positions. The free end of the arm is provided with a grip device by which the implements may be picked up. The sample solution is comprised of a vessel which is positioned in correspondence to one position of the arm.

The handling device is constructed to drive the arm up and down, left and right and rotatingly.

The supply device is a hopper having a bottom section provided with a groove adapted to receive an analytical implement The hopper further has an inner wall section which at least in its base section is parallel to the groove in order to align the implements with the groove. Furthermore, the bottom section of the hopper is movably connected with the wall section, so that the groove may take a position either inside or outside the wall section.

The supply device may be further provided with a detector located on or near the wall section. Its purpose is to detect whether an implement has been caught by the groove and if so to determine its orientation.

Furthermore, an inversion device may be provided on the outside of the wall section of the hopper which inverts an analytical implement fitted in the groove. The inversion device is located in a region where the implement groove passes by and turns an implement having a wrong top bottom orientation into the right position.

In another embodiment, a removing device for non-conforming analytical implements is provided on the outside of the wall.

Furthermore, the vessel for the sample solution may be provided with a liquid level detector. The detector may, for instance, comprise two electrodes, a circuit treating their signals and a motor for driving them. One of the electrodes may be constructed as a suction nozzle.

The invention will be further described in detail by the help of Figures.
Fig. 1 is a schematic perspective view showing an embodiment of the apparatus according to the invention.
Fig. 2 is a block diagram of the same apparatus.
Fig. 3 is a side view of an example of the analytical implement used in the invention.
Figs. 4 to 8 show an embodiment of the analytical-implement automatic supply device according to the invention, wherein

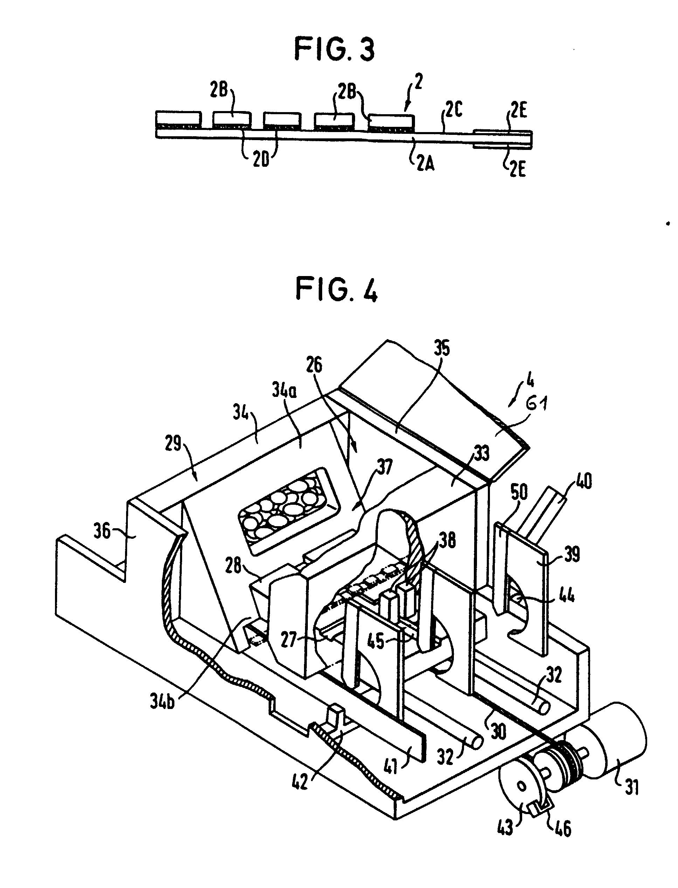

Fig. 4 is a perspective view of the whole apparatus,

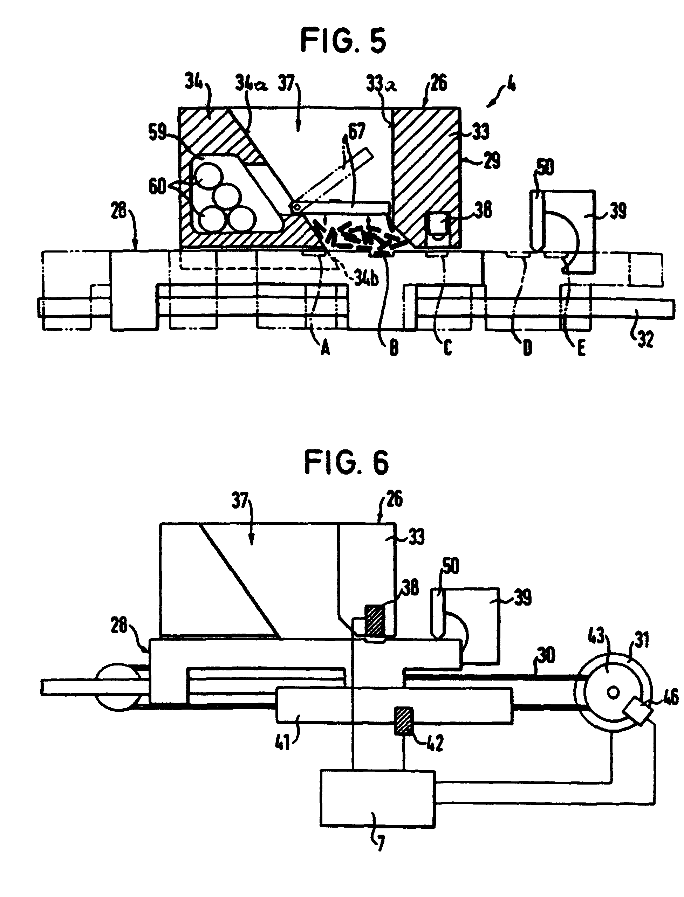

Fig. 5 is a vertical section showing the moving range of the bottom,
Fig. 6 is a block diagram of the same,

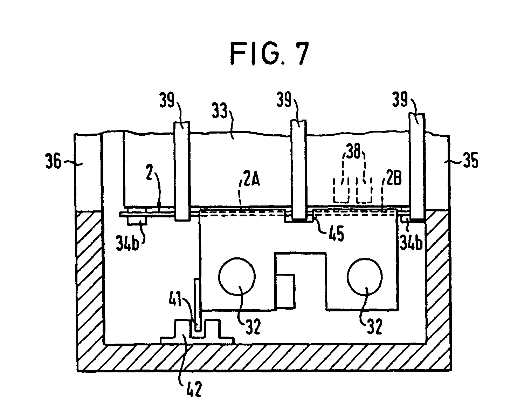

Fig. 7 is a partially sectional view of the same, and

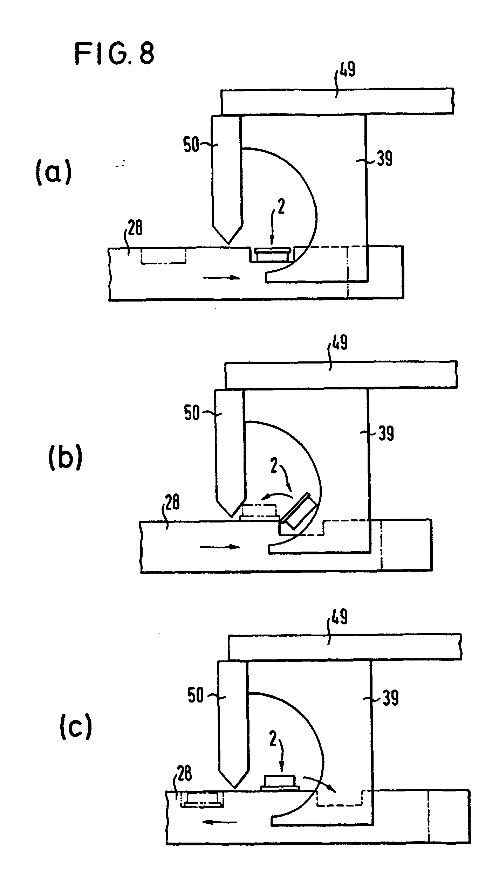

Fig. 8 (a), (b) and (c) show an inversion device according to the invention in its different operational positions, necessary for the inversion of an analytical implement.

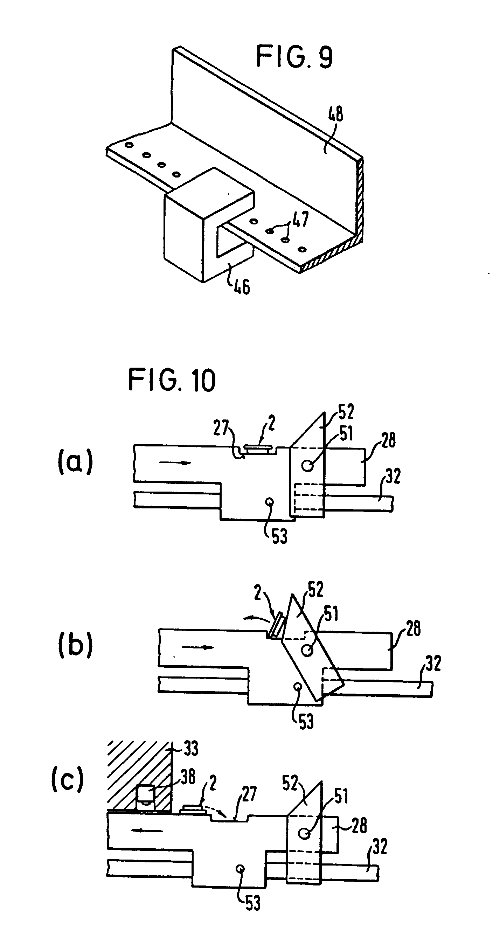

Fig. 9 is a schematic perspective view showing an embodiment of a disorder detecting device.
Figs. 10 (a), (b) and (c) show another embodiment of the inversion device in its different operational positions.

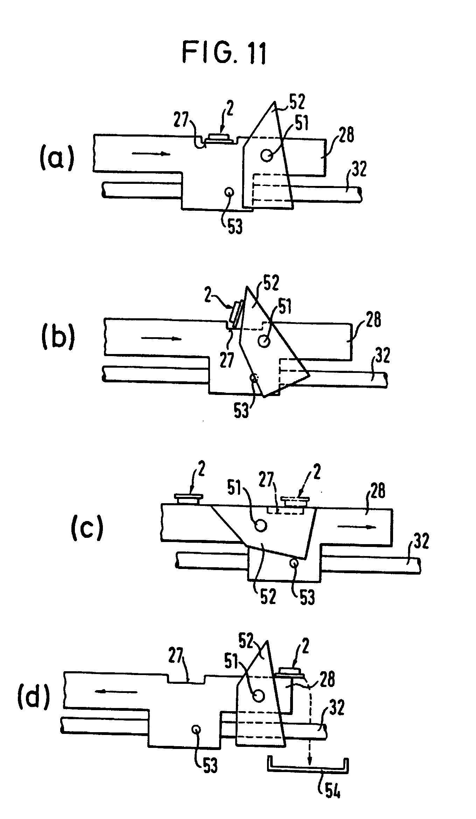

Figs. 11 (a), (b), (c) and (d) show the device of Fig. 10 acting as removing device.

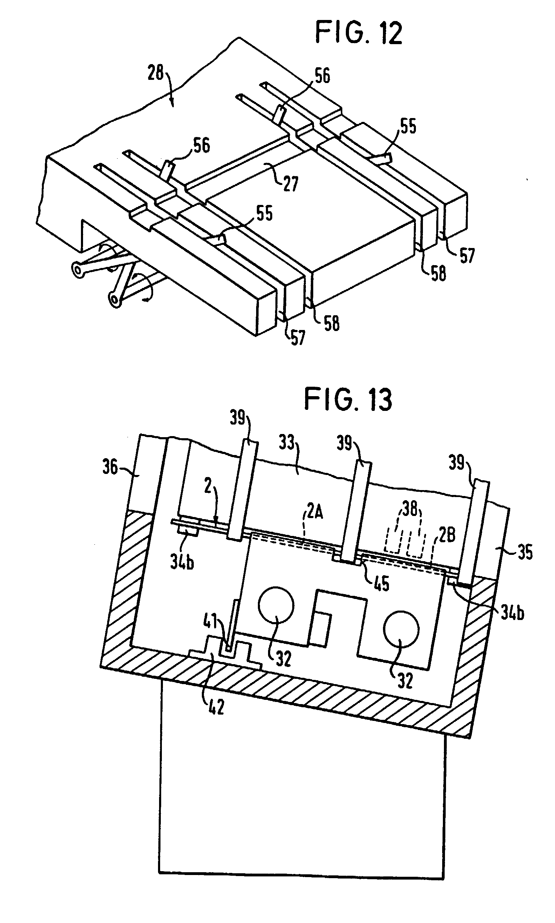

Fig. 12 is a perspective view showing still another embodiment of the inversion and removing device.
Fig. 13 is a sectional view of a modification of the analytical-implement automatic supply device according to the invention.

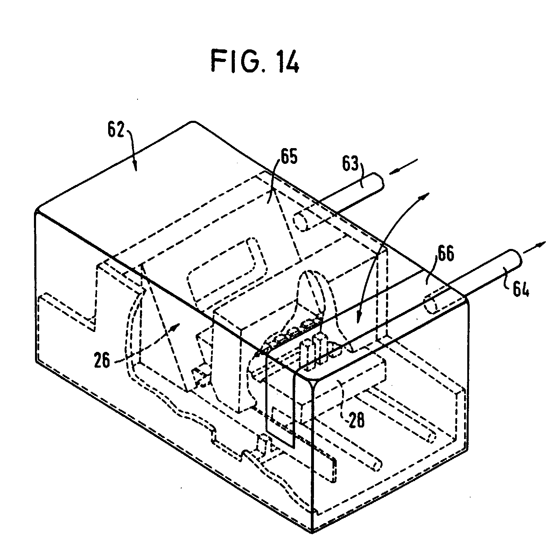

Fig. 14 is a perspective view of the device shown in Fig. 13.

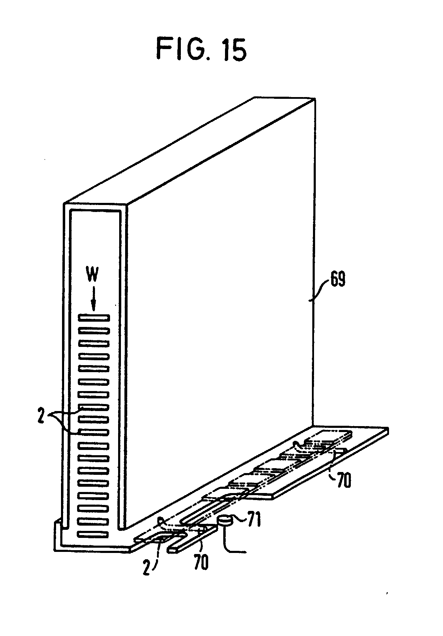

Fig. 15 is a perspective view showing an embodiment of the analytical-implement automatic supply device being of the cassette-type.

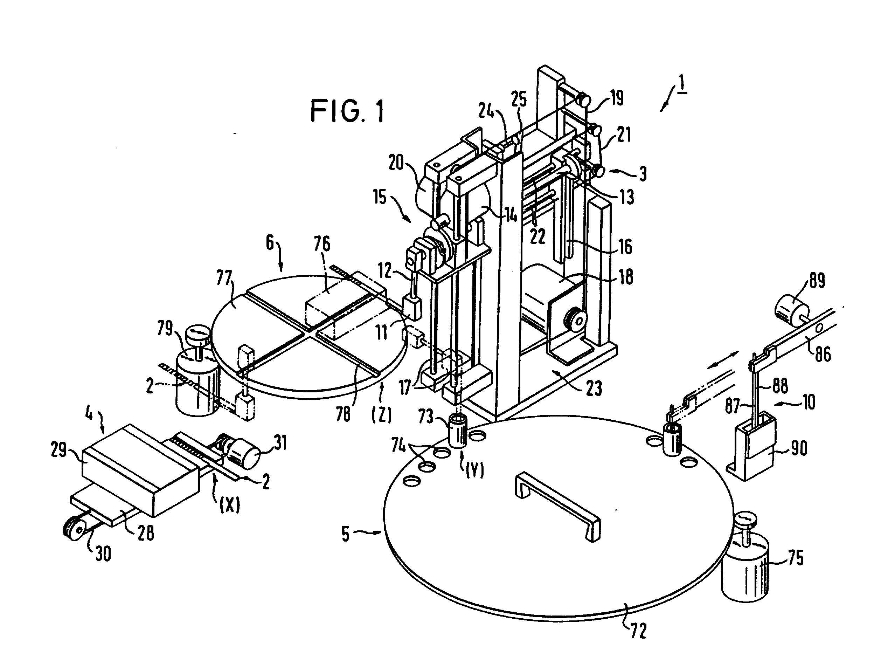

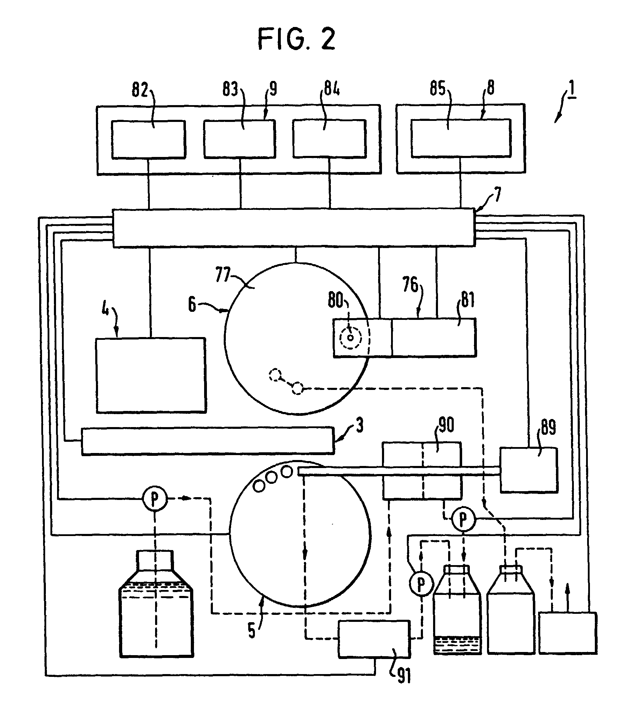

Fig. 1 is a schematic perspective view showing the working conditions of an embodiment of the apparatus according to the invention, and Fig. 2 is a corresponding block diagram. The automatic continuous analysis apparatus comprises an automatic analytical-implement handling device 3 cooperating with an automatic analytical-implement supply device 4, a sample-vessel supply device 5 and a known optical measurement device 6. In Fig. 2, reference numeral 7 indicates a control section provided with a CPU, clock device, etc., numeral 8 indicates an input section, and 9 an output section.

The automatic analytical-implement handling device 3 comprises an arm 12 provided with an analytical implement holder 11 on its end and driving means to move the arm. The driving means supports a rotating section 15 comprising the arm, 12 an arm driving shaft 13, and a shaft rotating motor 14 having vertical shafts 17, moveable in up-and-down direction by the help of a wire 19 wound around the shaft of a vertically driving motor 18. It also drives in right-and-left direction a slider 16 which supports one end of the arm driving shaft 13 to stop swing motion, by a wire 21 wound round the shaft of a right-and-left driving motor 20. The slider 16 is supported by right-and-left driving shafts 22, and the whole structure is built in a frame 23.

The analytical implement holder 11 of this embodiment has a grip device which is opened and closed by pushing and pulling of a release 24. In this embodiment, the release 24 is operated by a solenoid 25. The operation of the release may also be effected by an air cylinder or rotating cam, or the operation of the grip device may be directly effected by a solenoid or an air cylinder. A system which directly holds the analytical implement by air suction instead of the Grip device may be used. Among these, the release type is preferred, as it is light and strong. The release and air pie may be passed through the arm 12, or may be set afloat in the space. Motors 14, 18 and 20 are preferably pulse motors suitable to perform an accurate positioning.

The analytical-implement automatic handling device 3 is not limited to the one shown in the figures. A small-sized simple robot or any structure that can move the arm 12 up-and-down, right-and-left, and in circular motion by use of a motor and wire, screw thread, cylinder, etc. can be used.

The analytical implement automatic supply device 4 is adapted to supply analytical implements one by one, and various structures are considerable.

In one embodiment, a hopper type as shown in Figs. 4 to 14, is used. The hopper 26 comprises a movable bottom section 28 provided with an analytical-implement groove 27 and a side section 29. The analytical implement groove 27 is moved to the outside of the hopper by sliding the bottom section 28 by a wire 30 connected to the front and back of the bottom section 28 and driven by a motor 31. The motor 31 is preferably a pulse motor.

The structure and functioning of the analytical-implement automatic supply device are now described in detail. Fig. 4 is a perspective view showing an example of the analytical-implement automatic supply device 4, Figs. 5 and 6 are its vertical sections, and Fig. 7 is a partial section.

The analytical implement groove 27 is located perpendicularly to the moving direction of the bottom section 28 at its top face. The side section 29 comprises two wall sections 33 and 34 intersecting at right angles to the moving direction of the bottom section and two wall sections 35 and 36 which are parallel with the moving direction of the bottom section 28. The inside surfaces 33a and 34a of the wall sections 33 and 34 are parallel with the groove 27 viewed in plane (the lower edges of the inside walls are parallel with the longitudinal direction of the groove 27) and the section enclosed by the four inside walls and the bottom forms a storage section 37 for analytical implements 2. The bottom section 28 is narrower than the space between the wall sections 35 and 36 and is provided with some clearances therebetween.

In these drawings, reference number 38 indicates a detector for detecting the presence of analytical implements 2, 39 is an inversion plate of an inversion device, 40 is a presser lever for pressing the analytical implement 2 into the groove 27 outside the hopper, 41 is a shade fixed to the lower side face of the bottom section, 42 is a detector provided on the side of the shade 41 for detecting the position of the bottom section 28, and 43 is a rotary encoder attached to the shaft of the motor 31.

The operation of the automatic analytical-implement supply device 4 will now be described in the paragraphs (i) to (x):
(i) The bottom section 28 is supported by two slide shafts 32 inserted therethrough, and moved by the motor 31 in normal and reverse directions (right and left in Figs. 5 and 6) through the wire 30. The moving range extends from position A [where the analytical implement groove 27 somewhat exceeds the left inside wall surface (34a)] to position D in Fig.5. In this range, it passes position B [within storage section 37] and position C [(position of the detector 38)]. If required, it moves further to the inversion position E exceeding the stopping position D. (Inversion is described later).
   In this embodiment, the movement of the bottom section 28 is reversed when the groove 27 comes to position A and to position D by the reversal of the motor 31 according to the signal given by the detector 42 detecting the shade 41 to be absent. Upon receiving a signal that the analytical implement is reverse in bottom-top direction, the motor rotates further for certain pulses or time to send the bottom section 28 in normal direction.
(ii) The bottom section 28 moves back to position A after the analytical implement has been taken out of the groove 27 in position D. Then, the bottom section goes forward. After taking a new analytical implement into the groove 27 and being checked by the detector 38 at position C for the possession of an analytical implement, it further moves until the groove 27 comes into position D.
   With the bottom section 28 stopped in position, the presser lever 40 driven by the motor 44 presses down the analytical implement 2 into the groove 27. This is to secure the holding of the analytical implement 2 by the analytical implement holder 11, suppressing floating.
(iii) The suspension continues until the next action command is delivered. The action command is delivered by the control section 7 after a specified time has elapsed from the end of the preceding suspension or after detecting that the analytical-implement automatic handling device has taken out the analytical implement 2 from the groove 27. If no analytical implement is found in the groove 27, the bottom section 28 goes back from position C and continues the reciprocating motion until an analytical implement 2 is caught by the groove 27.
(iv) Since the inside wall surfaces 33a, 34a (or at least their bases) are parallel with the groove 27, the analytical implements 2 are arranged in parallel with the groove 27 in the inside wall section as the bottom section 28 moves and become easy to be caught by the groove 27.
   The left inside wall surface 34a inclined as shown is convenient for stirring the analytical implements in the inside wall section 34a and for taking an analytical implement 2 incompletely caught by the groove 27. To attain these objects more completely, it is advisable to project both sides of the lower wall section 34b downward somewhat from the bottom surface. Further, it is preferable to provide a longitudinal groove 45 in nearly the center of the bottom section 28 and to project the center of the lower wall section 34b to that it fits in the longitudinal groove 45.
   The inside wall surface 33a may be vertical, but preferably is chamferred to lead analytical implements smoothly into the groove.
(v) On the other hand, it is necessary to stop the movement of the bottom section 28 immediately when any disorder is detected, since if an analytical implement 2 is caught in the gap between the bottom section 28 and the bottom edge of the wall section 33, the reagent section 2B can be damaged.
   In the embodiment according to Fig. 6, a rotary encoder 43 is used as disorder detecting mechanism. A detector 46, a transmission type photointerruptor, transmits regular light-and-dark pulse signals to the control section 7 as the bottom section 28 moves.
   Upon production of a disorder, the pulse signals are disturbed. Immediately after detection of the disturbed pulse signals, the motor 31 is stopped. An alternate system may be used in which the analytical implement 2 is moved in reverse direction and then again in normal direction. If no disorder is found, the operation is normally continued. To stop the rotation immediately when plugging occurs, the motor preferably has weak torque or is provided with a clutch device which cuts the torque exceeding a specified value.
   Another example of the detecting means is shown in Fig. 9. It has a perforated plate 48 having a number of small holes 47 bored regularly in small intervals and fixed to the lower part of the bottom section 28. Monitoring by the detector 46 is done in the same manner as indicated above.
(vi) To check the presence of an analytical implement 2 in the groove 27, one detector 38 is sufficient. If a plurality of detectors of the same type or different types are used, top-bottom judgment or detection of an unacceptable implement are possible.
   The presence of an analytical implement is detected, for example, by checking the shade of the analytical implement 2 (reagent section 2B or coating layer 2E) with a transmission photo-interruptor. The top-bottom judgment is made, for example, from the difference of the quantity of reflected light from the top (reagent section 2B) and from the bottom (black adhesive tape 2D), using a reflection photo-interruptor.
   The detection of the presence and top-bottom judgment of an analytical implement may also be made as follows: Stepwise threshold values are set by use of a reflection photo-interruptor for quantities of reflected light from the groove 27 of the bottom section 28, from the strip 2A and adhesive tape 2D, and from the reagent section 2B, and they are discriminated by the control section 7, to effect detection of the presence and top-bottom judgment with the same detector. In the same way, similar means can be applied to the coating surface of the analytical implement 2, to effect the detection of the difference of the light reflected by the coating surface 2E, detection of the presence and top-bottom judgment of an analytical implement from the quantity of light simultaneously.
   Further, it is possible to provide a plurality of detectors 38 to monitor the individual reagent sections, in order to distinguish the type of implement and to find out endamaged ones (e.g. those having peeled reagent section 2B or scar) by the variation of the quantity of reflected light, and to remove non-conforming ones and defectives out of the system. Various types of detectors 38 can be used in combination. The detectors 38 can be installed in various positions such as inside or outside of the wall section 33, not limited to those as shown.
(vii) Top-bottom judgment is required for arranging the reagent sections 2B to a certain direction when the automatic analytical-implement handling device 3 mounts the analytical implement 2 on the reaction turnable of the optical measurement device after dipping it into the solution to be examined.
   If the arm of the automatic analytical-implement handling device 3 has the function to invert the analytical implement 2, it is sufficient to give to the analytical-implement handling device 3 only the information that the top and bottom of the implement is inverted. Otherwise, those facing the wrong side must be inverted so that all reagent sections 2B point to the same direction, upward or downward.
(viii) This inversion is effected by inversion plates 39 attached to a bar 49 mounted across the walls 35 and 36 above the inversion position E (Fig. 5). In this embodiment, the inversion plates 39 are positioned at both sides of the bottom section 28 and of the longitudinal groove 45.
   The action of the inversion mechanism is now described with reference to Fig. 8. Upon receiving a signal from the detector 38 indicating that the bottom-top direction of the analytical implement is wrong (Fig. 8 (a)), the motor 31 moves the bottom section 28 into a position where the groove 27 is behind position D (dotted line in Fig. 8 (a)). The analytical implement 2 moves along the curved surfaces of the inversion plates 39 and is inverted thereby (Fig. 8 (b)). Here, the analytical implement 2 is shifted toward the wall section 33 out of the groove 27.
   Then, the bottom section 28 goes back and drops the analytical implement 2 into the groove 27 by interceptors 50 which are arranged with the inversion plates 39 (Fig. 8 (c)). It may be dropped by the bottom edge of the outer wall of the wall section 33, instead of the interceptor. The bottom section 28 successively goes back and is checked by the detector 38. If the reagent section 2B is ascertained to point upward correctly, the bottom section goes back from this point to position D (dotted line in Fig. 8 (c)).
   Another possible example of the inversion device is shown in Fig. 10. It comprises levers 52 rotatably supported through a shaft by the wall sections 35 and 36 outside the hopper 26, and pins 53, projecting toward both sides from the lower front of the bottom section 28. Upon receiving a signal from the detector 38 indicating that the bottom-top direction of an analytical implement is wrong (Fig. 10 (a)), the bottom section 28 moves in normal direction and the levers 52 stand up being pushed by pins 53 at their lower portions. By this, the analytical implement 2 is pushed out and inverted (Fig. 10 (b)). The inverted implement is then dropped back into the groove 27 by the bottom edge of the outer wall of the wall section 33.
   It is also possible, as shown in Fig. 12, to provide levers 55, 55 near the rest position D of the groove 27, which are driven by a motor, solenoid, etc. to invert the analytical implement.
(ix) The disposal of non-conforming analytical implements 2 is described. Though analytical implements 2 are shipped after strict inspection, defectives such as those with a peeled reagent section 2B may possibly be present due to agitation in the hopper 26 or for other reasons. Moreover, when using different types of analytical implements 2 it exists the risk that a mingling of different types takes place. In such a case, usually abnormal measurements are obtained and remeasurement has to be performed. Remeasurement, however, takes time. Furthermore, in some cases a mingling is not noticed at all, if the degree of abnormality lies within the statistic distribution.
   One possible method to deal with this problem is to deliver an instruction from the control section 7, when the detector 38 has detected a disorder, to once return the groove 27 to position B and take out a new analytical implement 2. Alternately, a mechanism to remove non-conforming analytical implement may be provided.
   Various types of such mechanism for removing non-conforming analytical implement are possible. The inversion device shown in Fig. 10, for example, can be used directly. An analytical implement 2 caught in the groove 27 in normal direction as shown in Fig. 11 (a) is inverted by the inversion levers 52 as shown in Fig. 11 (b). The bottom section 28 is further moved in normal direction to bring down the levers 52 (Fig. 11(c)). Then the bottom section 28 is moved backward to return the levers 52 to the original position and moved further backward to release the analytical implement into the chute 54 (Fig. 11 (d)).
   Levers 56 different from the levers 55 shown in Fig. 12 can be used for removing non-conforming implements and the levers 55 and 56 may be driven by motors independently from each other. In Fig. 12, the bottom section 28 is provided with longitudinal cuts 57 and 58 for passing levers 55 and 56 therethrough.
(x) Furthermore, the hopper 26 may be tilted, for example, about 15° as shown in Fig. 13. This makes the ends of the analytical implements 2 even. Thereby, the grip position of the holding section 2C is made constant when the analytical implement is taken out by the automatic handling device 3, leading to accurate dipping.
   To keep the air in the storage section 37 dry, a desiccant storage 59 may be provided inside or outside the hopper 26 connected to the storage section 37. An example of this embodiment is shown in Figs. 4 and 5. The thick wall section accommodates a desiccant storage 59 which contains desiccant pieces 60. The hopper is preferably provided with a cover 62 to keep it dry.

As shown in Fig. 14, the hopper 26 and the moving range of the bottom section 28 may be closed by a cover 62 and dry air may be sent into this cover 62. The cover 62 is provided with pipes 63, 64 for circulating air, lid section 65, and opening cover 66 which automatically opens and closes, when the analytical implement 2 is taken out.

Furthermore, the analytical implement groove may be provided with a suction port, through which air is sucked by an air pump. This brings the warped analytical implement in close contact with the groove 27 or presses a floating analytical implement down (not shown).

To check the residue of analytical implements 2 in the storage section 37, means such as an optical sensor and a counter for the registration of the analytical implements taken out may be provided (not shown).

As shown in Figs. 4 and 5, a weight 67 is provided in the storage section 37. The weight suppresses the leap of analytical implements in the storage section 37 and gives them a snug fitting in the groove 27. The end of the weight 67 is connected to the lid by a wire, so that the weight 67 is lifted when the lid 65 is opened.

According to the invention, the bottom section 28 and the side section 29 may be moved relatively. Each wall section 33, 34, 45, 36 may be moved with the bottom section 28 fixed, or only the wall sections 33 and 34 may be moved.

In addition to the above described, an analytical-implement supply device of the cassette-type may be used.

Fig. 15 shows an example of such a type. Analytical implements packed in a cassette 69 are pushed out by a slider 70 one by one from the bottom and placed on the take-out position and ascertained by detector 71. They are then picked up by the analytical-implement holder 11 from this position.

Though the embodiment according to Fig. 1 uses a known sample-vessel supply device 5 and optical measurement device 6, various modifications of them are available.

In this example the sample vessel supply device 5 is a turntable system. The turntable 72 is provided with a plurality of ports for receiving sample vessels 73 in the peripheral section and is rotated in normal and reverse directions by a motor 75. If the turntable is made replaceable and successively changed, a great deal of samples can be tactfully treated.

The optical measurement device 6, on the other hand, comprises a light measuring section 76 and a reaction turntable 77 for leading the analytical implement 2 placed thereon. The reaction turntable 77 is provided radially thereon with a plurality of grooves 78 for putting an analytical implement 2 therein, and rotated intermittently by a motor 79. The light measuring section 76 is placed above a position where the groove 78 stops. The light measuring section 76 comprises an optical system 80 and a pulling device for moving the analytical implements 2. The motors 75 and 79 are preferably pulse motors.

The measuring operation by this automatic continuous analysis apparatus 1 is as follows.

The arm 12 of the analytical-implement automatic handling device 3 is moved outwardly (leftward in the drawing) by the rotation of the motor 20. At the same time, the rotary section 15 is brought down by the rotation of the motor 18 and the analytical-implement holder 11 is brought to the analytical-implement takeout position X of the analytical implement automatic supply device 4. In this position, the open analytical implement holder 1 closes after catching the holding section of the analytical implement 2. Then, the motors 18 and 20 rotate in reverse direction, and the motor 14 for shaft rotation rotates to bring the analytical implement holder 11 to position Y for dipping the analytical implement into the dipping solution. The analytical implement holder 11 is lowered to dip the reagent section 2B in the sample solution for a specified time. Then, the motor 18 rotates to pull up the analytical implement 2, and the motors 18 and 14 rotate to bring the analytical implement holder 11 to the positions Z of the turntable groove 78 on the optical measurement device. The analytical implement holder 11 puts the analytical implement 2 into the groove 78 by lowering from the upper side or by inserting it from the peripheral direction of the turntable.

The analytical implement 2 is sent to the light measuring section 76 by turning turntable 77, and then measured. Then, the analytical implement holder 11 returns to position X and repeats the same action.

The action of these devices 3, 4, 5 and 6 is controlled by the microcomputer of the control section 7. It also calculates the concentration, etc. of each material to be examined from the reflectance, and displays the results on the display section 82. In Fig. 2, 83 indicates a printer, 84 an external output, and 85 a keyboard.

The invention provides an automatic dipping of the analytical implement 2 into a sample vessel 73. If the sample vessel contains not enough solution, the reagent section 2B fails to be dipped, or if it is too much, the dipping time becomes too long.

To make the analysis more accurate, it is preferable to detect the level of the solution in advance and adjust the degree of insertion of the analytical implement 2 accordingly, or to issue a warning. The liquid level detection is effected, for example, by two long and short electrodes 87 and 88 supported on the end of the nozzle arm. The nozzle arm 86 is driven by a nozzle motor 89, and the electrodes 87 and 88 are washed in a washing tank 90 after each measurement.

The long electrode 87 can be used also as a suction nozzle to suck and lead the solution to a unit determining the gravity of the solution.

However, since suction prior to analytical implement dipping can lower the liquid level, it is favorable to estimate the quantity or detect the liquid level in advance, and make dipping before suction.

These operations are effected by controlling the rotation of the turntable 72. The liquid level detection may be effected by an optical sensor using reflected light.

As indicated heretofore, the apparatus according to the invention holds up the analytical implement successively supplied by the supplier by gripping its holding section, and after dipping the reagent section of the analytical implement into the sample solution for a specified time, sets the analytical implement on the table, and after a specified time measures the light reflected by the reagent section.

Thus, all the operations such as dipping in the sample solution, optical measurement, calculation and disposal of the used sample solution can be carried out automatically using the "Dip and Read" type analytical implement. This largely lightens the load on the operator in comparison with the convention method in which the "Dip" stage is performed manually, and largely reduces measuring errors because variations in dipping time and the time from the dipping to the start of measuring are decreased. In addition, large labor saving is attained since the work required to the operator is injection of the sample solution into the sample vessel only. It can be used for general purpose because it uses general analytical implements for visual use and is not independent on any special analytical implements.

The analytical implement supply device used in the invention stores analytical implements in the space enclosed by the bottom section having an analytical implement groove and two parallel walls which are parallel to the analytical implement groove, and takes out the analytical implements one by one fitted in the groove, by relatively reciprocating the bottom section to the walls.

Thus, the analytical implement can be taken out certainly one by one with the reagent sections directed in one direction certainly, only by putting them in the storage section with their holding sections arranged. In addition, normal analytical implements on the market can be used, and screening of different types of them and checking out of defectives are possible, leading to increased reliability of the measurements. It is simple in structure and operation.

## Claims

1. An automatic continuous analysis apparatus (1) which utilizes analytical implements (2) such as test strips, said comprising an automatic measuring device (6) which comprises an automatic implement carrier (77), which transfers the implements (2) one by one to a measuring section(76) of the automatic measuring device (6) and an automatic implement supply device (4) with a storage section (37), means (27, 28, 70) to remove the implements (2) one by one from said storage section (37) and transfer them to a picking up position and an automatic analytical implement handling device (3) having a movable arm (12) adapted to be displaced into different positions, the arm having a grip device (11) at its free end by which the implements (2) may be picked up from the picking-up position (X) and moved to a vessel (73) where they are dipped into a sample solution, wherein means (18, 20, 14) are arranged in said handling device (3) to drive the arm (12) up and down, left and right and rotatingly whereby the implements (2) may be dipped into the vessel (73) and into a sample solution contained therein and thereafter moved from said vessel (73) to the implement carrier (77), said implement carrier is a reaction turn table (77) which is provided radially thereon with a plurality of grooves (78) for putting an analytical implement (2) therein and rotated intermittently by a motor (79), carries the implements (2) to the light measuring section (76) after receiving the implements (2) dipped into the sample, and the action of handling device (3), supply device (4) and automatic measuring device (6) are controlled by a microcomputer of a control section (7) so that the implements (2) are dipped by the handling device (3) into the vessel (73) for a specified time and are measured by the measuring device (6) after a specified time.

2. An apparatus according to claim 1 characterized in that said supply device (4) for the analytical implements is a hopper (26) having a bottom section (28) provided with an analytical implement groove (27) adapted to receive an analytical implement and inside walls (33a, 34a) which at least at their bases are parallel to the groove (27), said bottom section (28) being movable with respect to the rest of the hopper (26) so that the analytical implement groove (27) can be positioned either inside or outside the rest of the hopper.

3. An apparatus according to claim 2 characterized in that the supply device is provided with a detector (38) for detecting/judging an analytical implement (2) held in the groove (27), said detector being located on or near the hopper wall (331 past which the analytical implement groove 127) moves.

4. An apparatus as claimed in claim 3, characterized in that at least one of the other wall surfaces (35, 36) of the hopper (26) is parallel with the moving direction of the analytical implement groove (27), and the bottom section (28) is inclined.

5. An apparatus according to the claims 2, 3 and 4, characterized in that an inversion device (39; 52; 55) for inverting an analytical implement (2) carried in the analytical implement groove (27) is provided outside of the hopper (26).

6. An apparatus according to the claims 2, 3, 4 and 5, characterized in that a removing device (52, 54; 56) for removing a non-conforming analytical implement by pressing it in the opposite direction, to its direction of movement is provided outside of the hopper (26).

7. An apparatus according to the claims 1 or 2, characterized in that a liquid level detector (10) is provided on the side of a sample vessel supply device (5).

8. An apparatus as claimed in claim 7, characterized in that said liquid level detector (10) comprises two electrodes (87, 88), a circuit treating their signals, and a motor (89) for driving the electrodes.

9. An apparatus according to claim 8, characterized in that one of the electrodes (87) is a suction nozzle.

## Patentansprüche

1. Automatisches, kontinuierliches Analysegerät (1), welches Analysenhilfsmittel (2) wie Teststreifen einsetzt, wobei das Gerät eine automatische Meßvorrichtung (6) aufweist, die einen automatischen Analysenhilfsmittelträger (77) aufweist, der die Analysenhilfsmittel (2) nacheinander zu einem Meßabschnitt (76) der automatischen Meßvorrichtung transportiert, und eine automatische Analysenhilfsmittel-Versorgungsvorrichtung (4) mit einem Lagerabschnitt (37), Mittel (27, 28, 70) zum aufeinanderfolgenden Entfernen der Analysenhilfsmittel (2) von dem Lagerabschnitt (37) und Überführen derselben zu einer Aufnahmestellung und eine automatische Analysenhilfsmittel-Handhabungsvorrichtung (3) mit einem bewegbaren Arm (12), der in verschiedene Positionen verschiebbar ist, wobei der Arm eine Greifvorrichtung (11) an seinem freien Ende aufweist, durch welche die Analysenhilfsmittel (2) von der Aufnahmestellung (X) aufnehmbar und zu einem Gefäß (73) bewegbar sind, wo sie in eine Musterlösung getaucht werden, wobei Mittel (18, 20, 40) in der Handhabungsvorrichtung (3) angeordnet sind, um den Arm (12) auf und nieder, nach links und rechts und drehend anzutreiben, wodurch die Analysenhilfsmittel (2) in das Gefäß (73) und in die darin enthaltene Musterlösung getaucht und danach von dem Gefäß (73) zu dem Analysenhilfsmittelträger (77) bewegt werden können, wobei der Analysenhilfsmittelträger ein Reaktions-Drehtisch (77) ist, der radial mit einer Mehrzahl von Nuten (78) zum Einsetzen der Analysenhilfsmittel (2) versehen ist und mittels eines Motors (79) intermittierend gedreht wird, die Analysenhilfsmittel (2) zum Licht-Meßabschnitt (76) transportiert, nachdem er die Analysenhilfsmittel (2) erhält, die in die Musterlösung eingetaucht worden sind, und wobei die Tätigkeit der Handhabungsvorrichtung (3), der Versorgungsvorrichtung (4) und der automatischen Meßvorrichtung (6) von einem Mikrocomputer eines Steuerabschnittes (7) gesteuert werden, so daß die Analysenhilfsmittel (2) von der Handhabungsvorrichtung (3) in das Gefäß (73) während einer bestimmten Zeit eingetaucht und von der Meßvorrichtung (6) nach einer bestimmten Zeit gemessen werden.

2. Gerät nach Anspruch 1, dadurch gekennzeichnet, daß die Versorgungsvorrichtung (4) für die Analysenhilfsmittel ein Magazin (26) mit einem Bodenabschnitt (28) ist, der mit einer Analysenhilfsmittelnut (27) ausgestattet ist, welche ein Analysenhilfsmittel aufnimmt und Innenwänden (33a, 34a), welche zumindest an ihren Basen parallel zu der Nut (27) verlaufen, wobei der Bodenabschnitt (28) in bezug auf den Rest des Magazins (26) bewegbar ist, so daß die Analysenhilfsmittelnut (27) entweder innerhalb oder außerhalb des Restes des Magazins in Stellung gebracht werden kann.

3. Gerät nach Anspruch 2, dadurch gekennzeichnet, daß die Versorgungsvorrichtung mit einem Detektor (38) zum Detektieren/Prüfen eines Analysenhilfsmittels (2) versehen ist, welches in der Nut (27) gehalten wird, wobei der Detektor auf oder nahe der Magazin-Wand (33) angeordnet ist, hinter welcher die Analysenhilfsmittelnut (27) sich bewegt.

4. Gerät nach Anspruch 3, dadurch gekennzeichnet, daß zumindest eine der anderen Wandflächen (35, 36) des Magazins (26) parallel zur Bewegungsrichtung der Analysenhilfsmittelnut (27) verläuft und der Bodenabschnitt (28) geneigt ist.

5. Gerät nach den Ansprüchen 2, 3 und 4, dadurch gekennzeichnet, daß eine Umkehrvorrichtung (39; 52; 55) zur Umkehrung eines Analysenhilfsmittels (2), welches in der Analysenhilfsmittelnut (27) getragen wird, außerhalb des Magazins (26) vorgesehen ist.

6. Gerät nach den Ansprüchen 2, 3, 4 und 5, dadurch gekennzeichnet, daß eine Entfernungsvorrichtung (52, 54; 56) zur Entfernung eines nicht entsprechenden Analysenhilfsmittels durch Drücken desselben in die entgegengesetzte Richtung zu seiner Bewegungsrichtung außerhalb des Trichters (26) vorgesehen ist.

7. Gerät nach den Ansprüchen 1 oder 2, dadurch gekennzeichnet, daß ein Flüssigkeitshöhendetektor (1) an der Seite einer Mustergefäß-Versorgungsvorrichtung (5) vorgesehen ist.

8. Gerät nach Anspruch 7, dadurch gekennzeichnet, daß der Flüssigkeitshöhendetektor (10) zwei Elektroden (87,88) aufweist, einen Schaltkreis, der deren Signale verarbeitet, und einen Motor (89) zum Antreiben der Elektroden.

9. Gerät nach Anspruch 8, dadurch gekennzeichnet, daß eine der Elektroden (87) eine Saugdüse ist.

## Revendications

1. Appareil automatique d'analyse continue (1) utilisant des instruments d'analyse (2) tels que des bandes-éprouvettes, cet appareil comprenant un dispositif de mesure automatique (6) comprenant un dispositif automatique (77) de transport d'instruments qui transfère les instruments (2) un par un à la section de mesure (76) du dispositif de mesure automatique (6), et un dispositif automatique (4) d'alimentation en instruments comportant une section d'emmagasinage (37), des moyens (27, 28, 70) pour extraire les instruments (2) un par un de ladite section d'emmagasinage (37) et les transférer dans une position de prélèvement et un dispositif automatique (3) de manipulation d'instruments d'analyse comportant un bras mobile (12) adapté pour être déplacé dans différentes positions, ledit bras comportant un organe (11) de saisie à son extrémité libre au moyen duquel les instruments (2) peuvent être prélevés dans la position de prélèvement (X) et entraînés jusqu'à un récipient (73) où ils sont trempés dans une solution échantillon, dans lequel des moyens (18, 20, 14) sont agencés dans ledit dispositif de manipulation (3) pour entraîner le bras (12) vers le haut et vers le bas, vers la gauche et vers la droite et en rotation de manière à tremper les instruments (2) dans le récipient (73) et dans une solution échantillon contenue par celui-ci et ensuite à les entraîner depuis ledit récipient (73) jusqu'au dispositif transporteur (77), ledit dispositif transporteur étant un plateau tournant à réaction comprenant une pluralité de rainures radiales (78) destinées à accueillir un instrument d'analyse et mis en rotation de manière intermittente par un moteur (79), transférant les instruments (2) jusqu'à la section de mesure lumineuse (76) après avoir reçu les instruments (2) trempés dans l'échantillon, et l'actionnement du dispositif de manipulation (3), du dispositif d'alimentation (4) et du dispositif de mesure automatique (6) étant commandé par un micro-ordinateur d'une section de commande (7) de manière que les instruments (2) soient trempés par le dispositif de manipulation (3) dans le récipient (73) pendant une durée déterminée et qu'ils soient mesurés par le dispositif de mesure (6) après une durée déterminée.

2. Appareil suivant la revendication 1, caractérisé en ce que le dispositif d'alimentation (4) en instruments d'analyse est une trémie (26) comportant un fond (28) pourvu de gorges (27) pour instruments d'analyse, adaptée pour recevoir un instrument d'analyse, et des parois internes (33a, 34a) qui, au moins à leur partie inférieure, sont parallèles à la gorge (27), ledit fond (28) étant mobile par rapport au reste de la trémie (26) de manière que la gorge (27) pour les instruments d'analyse puisse être positionnée soit à l'intérieur soit à l'extérieur du reste de la trémie.

3. Appareil suivant la revendication 2, caractérisé en ce que le dispositif d'alimentation est pourvu d'un détecteur (38) pour détecter et évaluer un instrument d'analyse (2) maintenu dans la gorge (27), ledit détecteur étant disposé sur la paroi (33) de la trémie ou au voisinage de celle-ci, devant laquelle se déplace la gorge (27) pour les instruments.

4. Appareil suivant la revendication 3, caractérisé en ce qu'au moins l'une des autres surfaces de parois (35, 36) de la trémie (26) est parallèle au sens de déplacement de la gorge (27) pour lesdits instruments, et en ce que le fond (28) est incliné.

5. Appareil suivant les revendications 2, 3 et 4, caractérisé en ce qu'il comporte, à l'extérieur de la trémie (26), un dispositif de retournement (39; 52; 55) pour retourner un instrument d'analyse (2) porté dans la gorge (27).

6. Appareil suivant les revendications 2, 3, 4 et 5, caractérisé en ce qu'il comporte, à l'extérieur de la trémie (26), un dispositif d'enlèvement (52; 54; 56) pour enlever un instrument d'analyse non conforme en le pressant dans le sens opposé à son sens de déplacement.

7. Appareil suivant les revendications 1 ou 2, caractérisé en ce qu'il est prévu un détecteur (10) de niveau de liquide sur le côté d'un dispositif (5) d'alimentation en récipients d'échantillons.

8. Appareil suivant la revendication 7, caractérisé en ce que ledit détecteur (10) de niveau du liquide comprend deux électrodes (87, 88), un circuit de traitement de leurs signaux, et un moteur (89) pour entraîner les électrodes.

9. Appareil suivant la revendication 8, caractérisé en ce que l'une des électrodes (87) est une buse d'aspiration.
